Europäisches Patentamt

European Patent Office

Office européen des brevets

(11) Veröffentlichungsnummer: **0 243 955 B1**

# EUROPÄISCHE PATENTSCHRIFT

(45) Veröffentlichungstag der Patentschrift: **15.07.92**

(21) Anmeldenummer: **87106256.8**

(22) Anmeldetag: **29.04.87**

(51) Int. Cl.⁵: **B60S 3/06**

(54) **Anlage zur Reinigung von Kraftfahrzeugen.**

(30) Priorität: **30.04.86 CH 1797/86**

(43) Veröffentlichungstag der Anmeldung:
**04.11.87 Patentblatt 87/45**

(45) Bekanntmachung des Hinweises auf die
Patenterteilung:
**15.07.92 Patentblatt 92/29**

(84) Benannte Vertragsstaaten:
**AT BE CH DE ES FR GB GR IT LI LU NL SE**

(56) Entgegenhaltungen:
EP-A- 0 144 473       EP-A- 0 162 709
BE-A- 902 273        DE-A- 1 530 939
DE-A- 1 780 425      DE-A- 2 822 046
DE-B- 1 007 196      FR-A- 624 584
FR-A- 847 082        FR-A- 2 044 344
FR-A- 2 133 382      GB-A- 2 100 204
US-A- 1 613 213      US-A- 1 827 886
US-A- 3 037 224      US-A- 3 167 797
US-A- 3 263 341      US-A- 3 451 085
US-A- 3 685 079      US-A- 4 135 533

PATENT ABSTRACTS OF JAPAN, Band 7, Nr.
193 (M-238)[1338], 24. August 1983; & JP-A-58
93 654 (JIDOUSHIYA SEIKI KOGYO K.K.)
03.06.1983

(73) Patentinhaber: **Firma Günther Weikmann**

**W-7918 Illertissen(DE)**

(72) Erfinder: **Weikmann, Günther**
**Ulmerstrasse 19**
**W-7918 Illertissen(DE)**

(74) Vertreter: **Klunker . Schmitt-Nilson . Hirsch**
**Winzererstrasse 106**
**W-8000 München 40(DE)**

**Beschreibung**

Die Erfindung bezieht sich auf eine Anlage zur Naßreinigung von Kraftfahrzeugen, mit einem mindestens teilweise gegenüber der Umgebung abgegrenzten, überdachten Behandlungsraum, einer angetrieben drehbaren Plattform im Boden des Behandlungsraumes zur Aufnahme eines zu reinigenden Kraftfahrzeugs, und einer Einrichtung zum Aufbringen von Reinigungsflüssigkeit auf das zu reinigende Kraftfahrzeug.

Eine derartige Kraftfahrzeug-Waschanlage ist aus dem Dokument US-A-3 451 085 bekannt.

Die erfindungsgemäße Anlage ist dadurch gekennzeichnet, daß neben der Plattform im feststehenden Bodenbereich des Behandlungsraumes ein Standplatz für eine Selbtwaschperson und eine Schlauchtrommelanordnung vorgesehen sind, die mindestens drei rotierbare Trommeln jeweils mit einem davon abwickelbaren und darauf aufwickelbaren Schlauch sowie einer Spritzdüsenlanze am freien Schlauchende aufweist, wobei jeder Schlauch mit einer Zuführeinrichtung für eine eigene Behandlungsflüssigkeit verbunden ist.

Anlagen für das Selbstwaschen von Kraftfahrzeugen sind bekannt, allerdings ohne drehbare Plattform zur Aufnahme des zu reinigenden Kraftfahrzeugs. Diese Anlagen sind herkömmlicherweise mit nur einem langen, schweren Schlauch ausgestattet (siehe z.B. GB-A-2100204 oder FR-A-2044344). Die das Kraftfahrzeug waschende Person muß mühsam mit dem sperrigen Schlauch ggf. mehrfach um das Kraftfahrzeug herumgehen. Wenn mit mehreren Reinigungs- und Behandlungsflüssigkeiten hintereinander gearbeitet wird, ergeben sich Flüssigkeitsverluste beim Übergang von einer Flüssigkeit auf die nächste, weil während des Übergangs ein nicht optimal brauchbares Flüssigkeitsgemisch geliefert wird. Flüssigkeitspumpe und Schlauch müssen für den höchsten erforderlichen Förderdruck und die größte benötigte Fördermenge ausgelegt sein. Dies führt zu einem dickwandigen, schweren Schlauch, der schwierig von Hand zu manipulieren ist.

Demgegenüber gestaltet sich die Reinigung von Kraftfahrzeugen in der erfindungsgemäßen Anlage einfacher, rationeller und rascher. Die Selbstwaschperson kann während der Fahrzeugbehandlung an dem Standplatz oder zumindest in dessen Nähe verbleiben und muß keinen langen, schweren Schlauch rund um das Fahrzeug schleppen. Es ergibt sich ein optimal geringer Verbrauch an Reinigungs- bzw. Behandlungsflüssigkeiten.

Bevorzugte Ausgestaltungen der erfindungsgemäßen Anlage sind in den abhängigen Patentansprüchen angegeben.

Die Erfindung wird beispielsweise anhand einer bevorzugten Ausführungsform gemäß der Zeichnung näher erläutert. Es zeigen:

Figur 1 a) einen Querschnitt durch eine Anlage gemäß der Erfindung längs der Schnittfläche A-A in Figur 2, wobei das Traggerüst und der Standplatz (Bedienungsstand (34)) der Anlage im Vergleich mit deren gegenseitiger Lage in der Figur 2 verdreht dargestellt sind;

b) ) eine Einzelheit zur Lagerung einer erfindungsgemässen drehbaren Plattform für Kraftfahrzeuge;

Figur 2 kreisrunden Grundriss der Anlage nach der Figur 1 mit Traggerüst;

Figur 3 Aufbau einer drehbaren Plattform im Boden der Anlage gemäss der Fig. 2 und des die Plattform umgebenden feststehenden Bodenbereiches sowie eine unter der Plattform angeordnete, ebenfalls drehbare Schauchtrommelanordnung (Mehrfach-Gerätegarnitur (100) in Obenansicht;

Figur 4 schematische Darstellung einer erfindungsgemässen Anlage mit rechteckförmigem Grundriss und mit Andeutung möglicher Richtungen für die Ein- und Ausfahrt in Obenansicht;

Figur 5 schematisch die Obenansicht einer sechseckigen Anlage gemäss der Erfindung;

Figur 6a) eine Mehrfachanlage mit vier kreisrunden Behandlungsräumen gemäss der Erfindung und unter Andeutung der Ein- und Ausfahrtsrichtungen;

b) wie unter a) jedoch mit sechseckigen Behandlungsräumen;

c) wie unter a) jedoch mit viereckigen Behandlungsräumen und

d) eine Gruppe konventioneller Waschboxen mit Rechteckgrundriss und mit parallel zueinander verlaufender Durchlaufrichtung der zu behandelnden Fahrzeuge gemäss dem bekannten Stande der Technik;

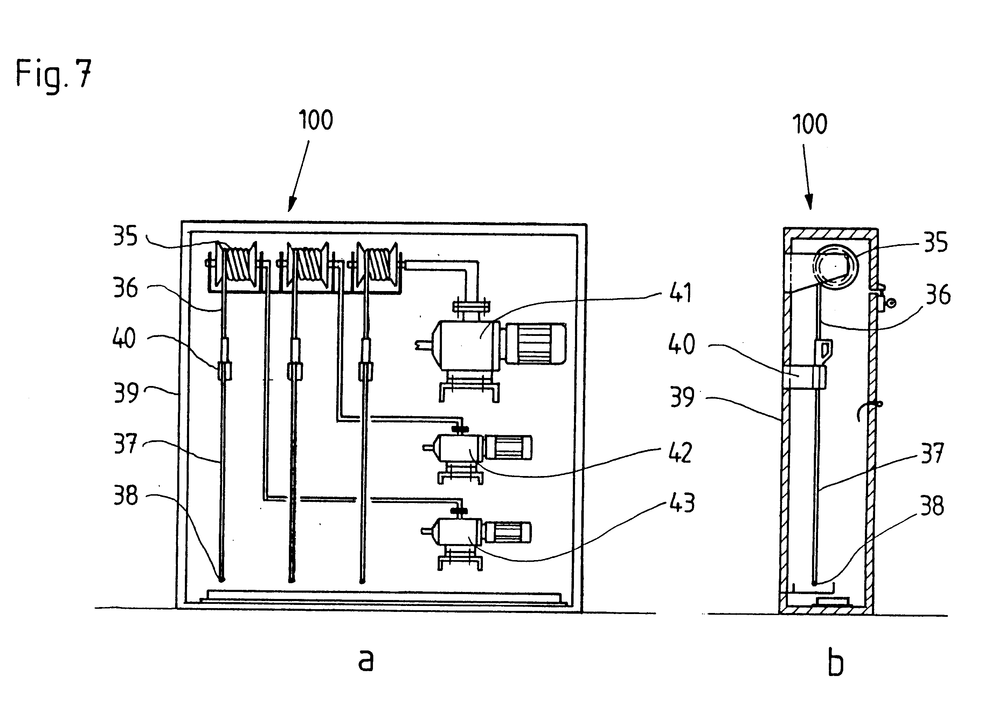

Figur 7a) Vorderansicht der Mehrfach-Gerätegarnitur des Bedienungsstandes in einem Behandlungsraum gemäss der Erfindung, bestehend aus drei je auf einer Trommel aufgewundenen, kurzen Schläuchen in einer Schutzverkleidung, wobei die Schläuche an ihren freien Enden je eine Spritzlanze aufweisen und an ihren anderen Enden je mit einer Förderpumpe in Verbindung stehen und

b) Seitenansicht der Mehrfach-Gerätegarnitur samt Schutzverkleidung nach der Abbildung a).

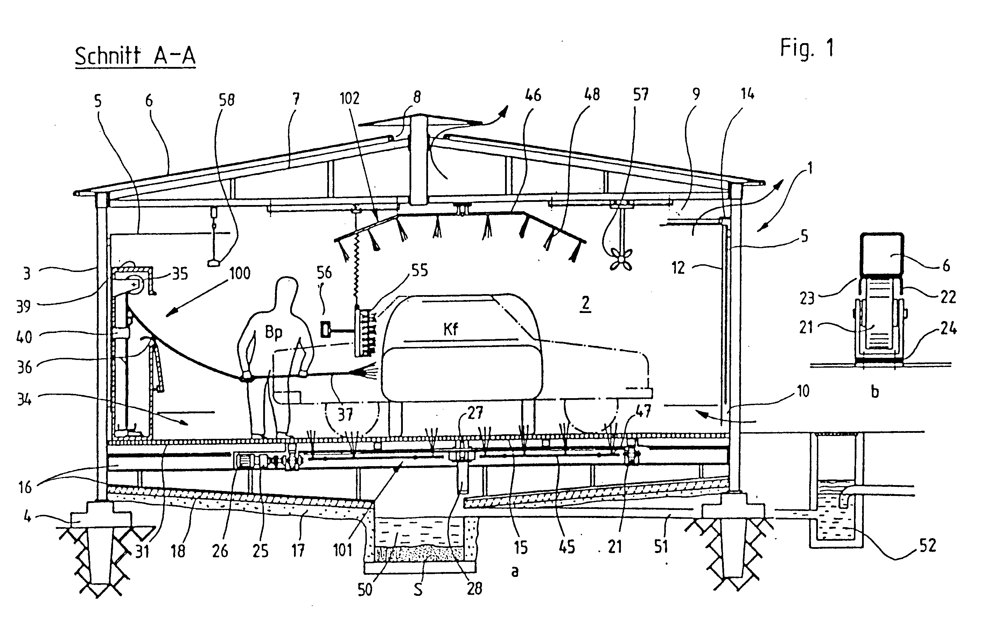

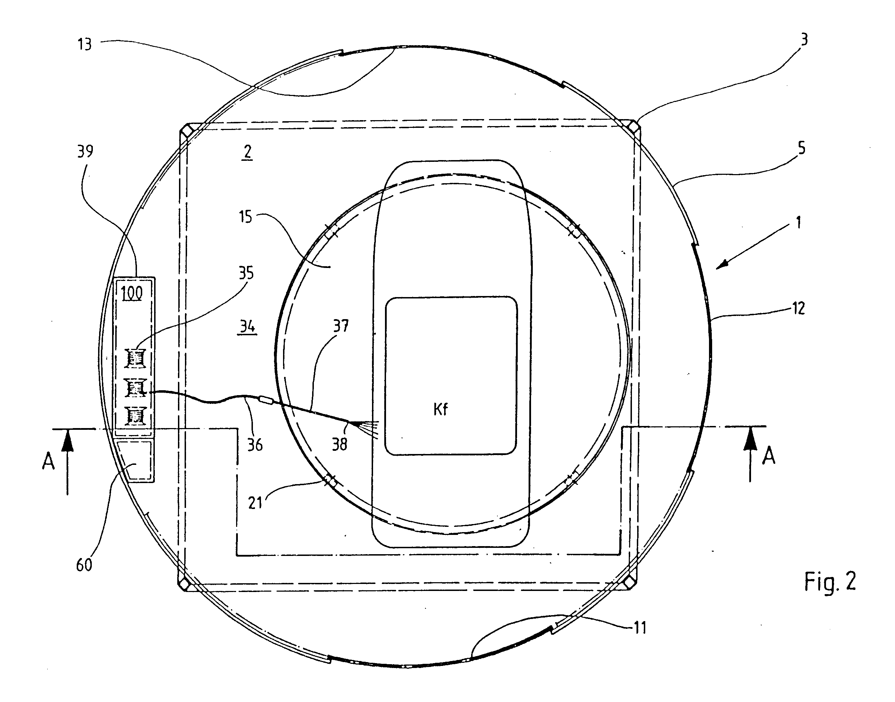

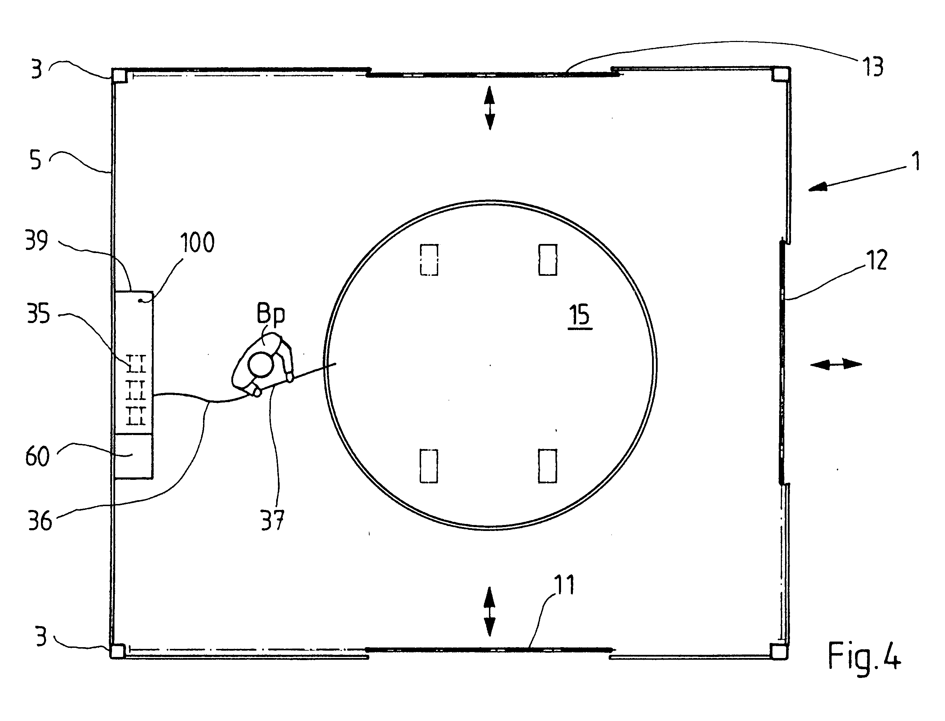

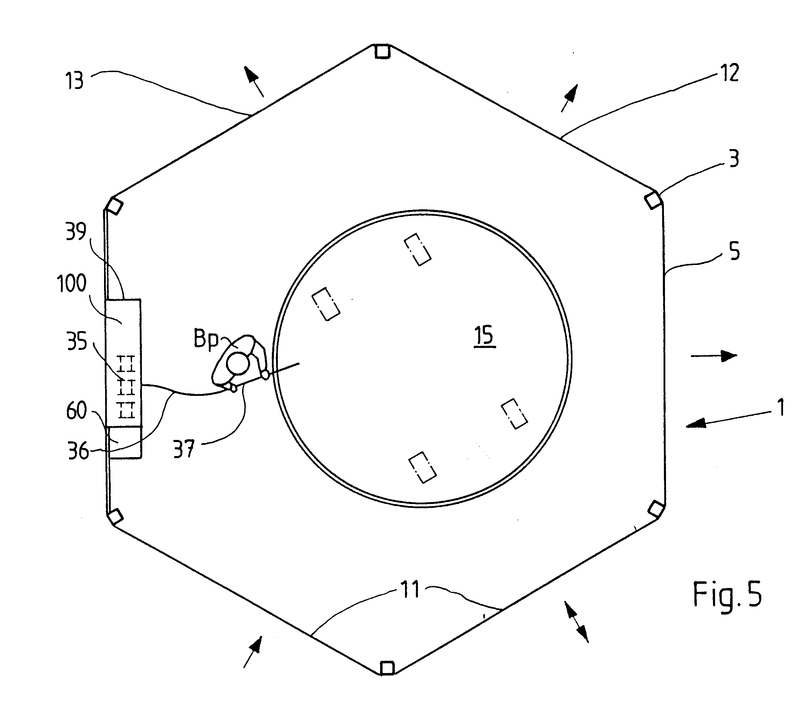

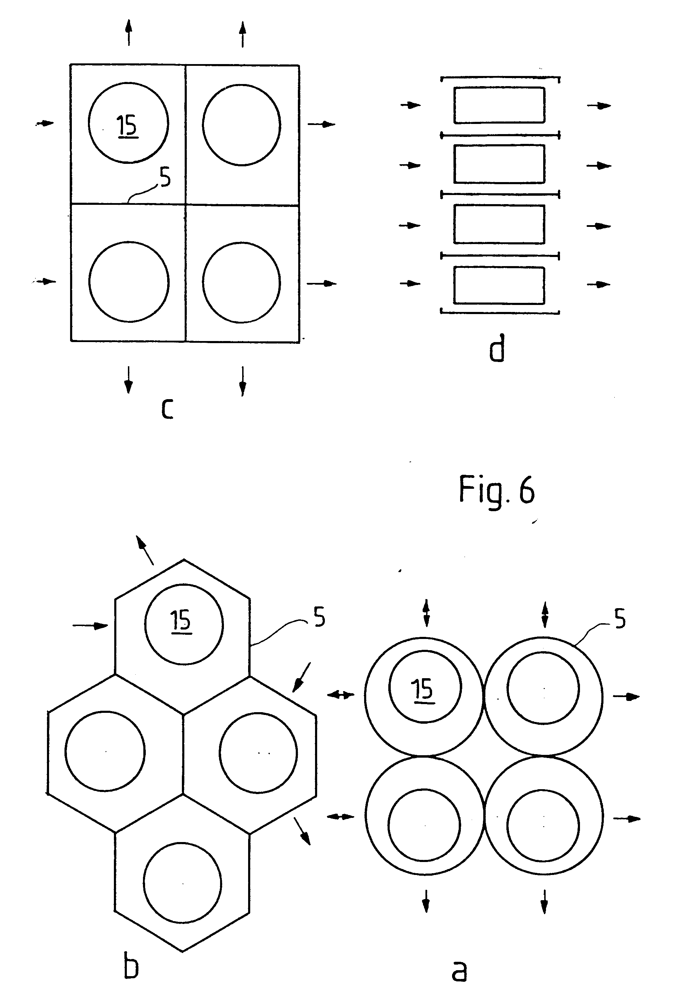

Der Aufbau einer erfindungsgemässen Anlage wird schematisch in den Figuren 1a, b sowie 2 und 3 veranschaulicht. Die Figuren 2 bis 5 zeigen hinsichtlich eines reibungslosen Betriebes bei gleichzeitig wirtschaftlicher Oberflächennutzung besonders zweckmässige Grundrissformen für die Anlage. Beispiele jeweils für eine günstige Konfiguration von Mehrfachanlagen auf der Grundlage der Erfindung sind der Figur 6 entnehmbar. Die Figur 7 führt schliesslich vorteilhafte Einzelheiten bezüglich der Beschaffenheit der Mehrfach-Gerätegarnitur auf dem Bedienungsstand einer derartigen Anlage vor Augen, die erst durch die Verwendung einer drehbaren Plattform gemäss der Erfindung ermöglicht werden.

Die zum Unterhalt von Kraftfahrzeugen Kf dienende, erfindungsgemässe Anlage besteht in einem aus vorfabrizierten Bauelementen nach Art eines Pfahlbaues relativ leicht erstellbaren, wieder zerlegbaren und versetzbaren Gehäuse 1, das einen Behandlungsraum 2 umschliesst. Das aus metallenen Profilrohren 3 vorzugsweise mit Viereckquerschnitt zusammengesetzte Traggerüst des Gehäuses 1 ist an einer Anzahl in den Erdboden getriebener Stahlpfähle 4 verankert, wobei die Anzahl der letzteren derjenigen der vertikalen Profilrohre 3 entspricht. Es sind das Traggerüst des Gehäuses 1 seitlich mit dünnen, bogenförmigen oder ebenen Wandplatten 5 aus halbdurchsichtigem Kunststoff verkleidet und der Behandlungsraum 2 mit einem pilzförmigen Dach 6 aus dem gleichen Material abgedeckt. Das Pilzdach 6 wird von einem Dachgerüst 7 getragen und weist zur Entlüftung des Behandlungsraumes 2 eine zentrale Oeffnung 8 auf. Aus dem gleichen Grund sind die Wandplatten 5 so bemessen, dass die Seitenverkleidung des Gehäuses 1 rundum je eine obere und eine untere Entlüftungsöffnung 9 und 10 frei lässt. Die Ein- und Ausgangstüren 11, 12, 13 des Behandlungsraumes 2 bestehen aus Wandplatten gleicher Beschaffenheit, die auf Führungsvorrichtungen 14 verschiebbar angeordnet sind. Der Standort und die Ausrichtung von Ein- und Ausgang sind beliebig wählbar. Auf diese Weise kann die Anlage den jeweiligen örtlichen Gegebenheiten bzw. Erfordernissen zwecks optimaler Oberflächennutzung angepasst werden. Dies gilt insbesondere für den Fall einer Mehrfachanlage aus mehreren nebeneinander aufgestellten Gehäuse 1 mit kreisrundem oder auch vieleckigem Grundriss.

Zur Aufnahme jeweils des zu behandelnden Kraftfahrzeuges Kf ist eine drehbare Plattform 15 im Boden des Behandlungsraumes 2 angeordnet.

Die drehbare Plattform 15 und der diese umgebende feststehende Bodenbereich werden von einem besonderen Bodengerüst 16 getragen, in dem die drehbare Plattform 15 mit Hilfe eines Zentrallagers 27 zweckmässig exzentrisch in Bezug auf die geometrische Mitte des Bodens des Behandlungsraumes 2 angelenkt ist. Unter dem Bodengerüst 16 ist eine vorzugsweise auf ein Sandbett 17 verlegte Bodenisolation 18 in Form einer Kunststofffolie oder eines Bleches vorgesehen. Die dadurch erreichbare Eindämmung von Wärmeverlusten hält den Aufwand für die Beheizung der Anlage im Winter klein. Besonders vorteilhaft weist die drehbare Plattform 15 ein aus Sektoren gebildetes, kreisrundes Stahlgerippe 19 auf, in die Rostelemente 20 ebenfalls aus Stahl und mit Kreisausschnittform eingesetzt sind. Diese Beschaffenheit ermöglicht das Durchspritzen von Reinigungsflüssigkeiten von unten durch die Plattform 15 bei dennoch guter Tragfähigkeit derselben sowie auch einen einfachen Ersatz allenfalls abgenützter Rostelemente 20. Die drehbare Plattform 15 ist ferner mittels Rollen 21 auch längs ihres Umfangs im Bodengerüst 16 gelagert, die gegen die Unterseite der Plattform 15 zwischen einem äusseren Schutzkragen 22 und einem inneren solchen 23 in Umfangsnähe aufliegen, wobei die Lagerung der Rollen 21 jeweils über eine unter denselben angeordnete und aus Justierplatten zusammengesetzte Höhenreguliervorrichtung 24 im Bodengerüst 16 befestigt ist (vgl. Fig. 1b). Die beiden Schutzkragen 22, 23 verhindern, dass zwischen die Laufflächen von Plattform 15 und Rollen 21 Schmutz eindringt. Die Höhenreguliervorrichtungen 24 gestatten eine waagrechte Feineinstellung der Plattformebene. Zum Drehen der Plattform 15 ist ein Antrieb 25 ausserhalb des Plattformumfangs vorgesehen. Der Antrieb 25 steht mit einer der Rollen 21 in Betätigungsverbindung. Es wäre jedoch auch die Anordnung eines zentralen Unterflurantriebes denkbar. Es ist als die Kraftmaschine des Antriebs für die drehbare Plattform 15 ein Elektromotor 26 mit Drehzahlregulierung und Drehrichtungsumkehr vorgesehen. Es könnte jedoch anstelle des Elektromotors 26 zweckmässig auch eine in gleicher Weise steuerbarer Hydraulikmotor zur Verwendung gelangen.

Unterhalb des Zentrallagers 27 der drehbaren Plattform 15 ist ferner auch ein Vertikalantrieb 28 in Form eines Druckzylinders eingebaut. Anhand des Vertikalantriebes 28 ist ein Anheben der drehbaren Plattform 15 beispielsweise zwecks Wartung, Reparatur oder Ersatz der Rollen 21 möglich. Anstelle des Druckzylinders wäre natürlich auch die Verwendung eines andersartigen Vertikalantriebes denkbar.

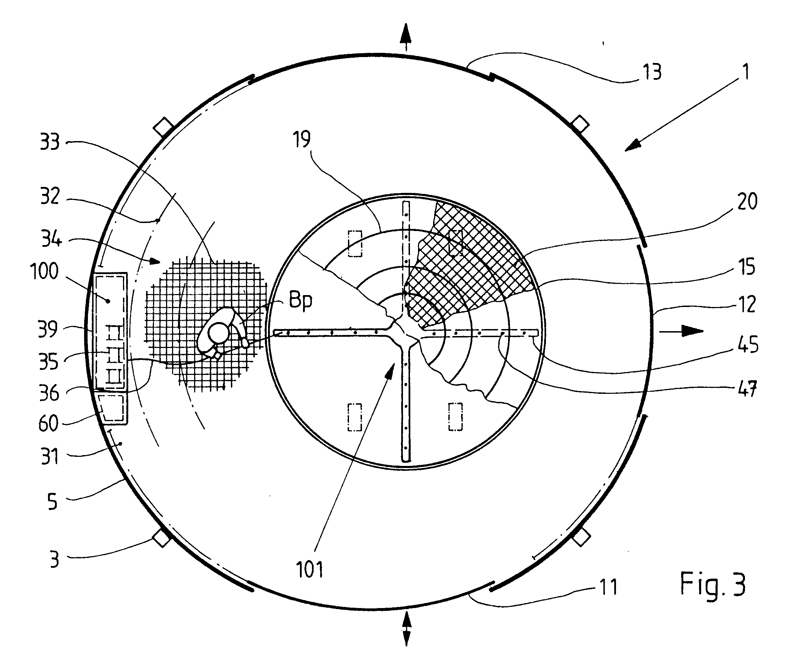

Wie den Figuren 2 und 3 entnehmbar bilden die Bodenpartien des Behandlungsraumes 2 rund um die drehbare Plattform 15 einen ortsfesten Bodenrost 31, der in Draufsicht die Gestalt einer unsymmetrischen Ringfläche aufweist. Der Bodenrost 31 besteht ähnlich wie die drehbare Plattform 15 aus einem wiederum in Sektoren unterteilten Stahlgerippe 32 und in die Sektoren einsetzbaren stählernen Rostelementen 33 gleicher Gestalt (vgl. insbesondere Fig. 3). Sowohl die drehbare Plattform 15 als auch der ortsfeste Bodenrost 31 sind mit einer in Figur 1 nicht dargestellten Heizeinrichtung versehen, damit die ablaufenden Reinigungsflüssigkeiten im Winter nicht in den Rostöffnungen festfrieren können. Der breiteste Bereich der Ringfläche des Bodenrostes 31, in dem ja der grösste Abstand zwischen dem zu behandelnden Kraftfahrzeug Kf und der Wandung des Behandlungsraumes 2 besteht, ist als ein Bedienungsstand 34 vorgesehen. Dieser ist der hauptsächliche Bewegungsbereich einer Bedienungsperson Bp. Da diese dank der drehbaren Plattform 15 gemäss der Erfindung bei der Behandlung nicht das Kraftfahrzeug Kf zu umrunden braucht, kann auch die Schlauchlänge, die für die Zuführung einer Reinigungsflüssigkeit zum Kraftfahrzeug Kf erforderlich ist, im Gegensatz zu derjenigen bei konventionellen Anlagen erheblich kleiner gehalten werden. Diesem Sachverhalt zufolge wird das Vorsehen je eines besonderen Schlauches für eine jede Reinigungsflüssigkeit möglich, mit deren Hilfe die Zuführung mehrerer Reinigungsflüssigkeiten unterschiedlicher Art unabhängig voneinander und ohne die Gefahr einer Vermengung derselben durchführbar ist. Es kann somit die Wandstärke eines jeden Schlauches entsprechend der Beanspruchung jeweils durch ein und denselben zur Zuführung immer der gleichen Reinigungsflüssigkeit bestimmten Förderdruck p und der Schlauchquerschnitt nach Massgabe der benötigten Fördermenge Q gewählt werden. Es lassen sich auch den je nach Reinigungsflüssigkeit erforderlichen Förderdrücken p und Fördermengen Q entsprechend abgestufte Förderpumpen verwenden. Die relativ kurzen Schläuche sind manuell leicht zu handhaben und lassen sich auf Trommeln aufwinden, so dass eine einfache, handliche Mehrfachanordnung ermöglicht wird. Besagte Mehrfachanordnung ist mit relativ bescheidenem Aufwand realisierbar, beansprucht wenig Platz, kann frostgeschützt untergebracht werden und erfordert keine teuere Versorgungsanlage. Ein weiterer gewichtiger Vorteil der Mehrfachanordnung besteht darin, dass hierbei mit der Vermeidung einer Vermischung verschiedenartiger Reinigungsflüssigkeiten auch der damit verbundene, einleitend geschilderte Mehraufwand an denselben sowie an Zeit ausgeschlossen ist.

Im dargestellten Ausführungsbeispiel der erfindungsgemässen Anlage weist der Bedienungsstand 34, wie sich den Figuren 2 bis 5 und insbesondere der Figur 7 entnehmen lässt, eine erste Mehrfach-Gerätegarnitur 100 auf, die drei je auf eine Trommel 35 aufgewundene Schläuche 36 je mit einer jeweils an deren freies Ende anschliessenden Spritzlanze 37 nebst Spritzdüse 38 umfasst. Die Figur 7a zeigt die Vorderansicht der ersten in einer Schutzverkleidung 39 untergebrachten Mehrfach-Gerätegarnitur 100 bei entfernter vorderer Schutzabdeckung und die Figur 7b eine Seitenansicht hiervon im Schnitt. Die Schutzverkleidung 39 ist wärmeisoliert und beheizbar. In der Figur 7 befinden sich sämtliche Geräte ausser Betrieb, wobei die Schläuche 36 vollständig auf ihre Trommeln 35 aufgerollt und die Spritzlanzen 37 in ihre Halterungen 40 eingehängt sind. Es wären jedoch auch an der Aussenfläche der Schutzverkleidung 39 vorgesehene, wärmeisolierte und beheizbare Hülsen zur Aufnahme jeweils einer Spritzlanze 37, wenn diese ausser Betrieb abgelegt ist, denkbar. Es sind weiters in der Figur 7a auch 3 Förderpumpen 41, 42, 43 innerhalb der Schutzverkleidung 39 dargestellt, die jeweils einen Schlauch 36 mit einer bestimmten Reinigungsflüssigkeit speisen. Die Unterbringung der Förderpumpen 41, 42, 43 wäre auch an einem anderen geeigneten Ort der Anlage möglich. Die grössere Pumpe 41, die in den rechtsseitigen Schlauch 36 in der Figur 7a Reinigungsflüssigkeit in Form vorzugsweise von vorgewärmtem Wasser für den Hauptwaschgang liefert, ist eine Hochdruckpumpe mit einem Druck von mindestens 100 bar und weist eine variable Förderleistung von 1'000 bis 4'000 l/h auf. Die kleinere Förderleistung von 1'000 l/h ist für die Speisung der ersten Mehrfach-Gerätegarnitur 100 und die grössere Förderleistung von bis zu 4'000 l/h für die Speisung weiterer noch zu beschreibender Gerätegarnituren ausgelegt. Die beiden kleineren Förderpumpen 42, 43 gleicher Grösse speisen jeweils in den angeschlossenen Schlauch 36 Wasser für den Vorwaschgang und / oder Superschaum bzw. Wasser zum Klarspülen und / oder Heisswachs unter einem niederigeren Druck von 20 bar und mit einer Förderleistung von 200 l/h.

Unter der drehbaren Plattform 15 bzw. darüber am Dachgerüst 7 sind jeweils 4 Rohrstücke 45 bzw. 46 in Kreuzform angeordnet. Die Rohrstücke 45 bzw. 46 sind je mit einer Anzahl von Spritzdüsen 47 bzw. 48 ausgerüstet, wobei die Spritzdüsen 47 an den Rohrstücken 45 des unter der Plattform 15 befindlichen Rohrkreuzes durch die Rostöffnungen der Plattform 15 gegen den Unterboden eines auf dieser stehenden Kraftfahrzeuges Kf und die Spritzdüsen 48 an den Rohrstücken 46 des am Dachgerüst 7 angebrachten Rohrkreuzes gegen das Dach desselben Kraftfahrzeuges Kf gerichtet sind. Das aus den Rohrstücken 45 nebst den zugehörigen Spritzdüsen 47 bestehende Rohrkreuz bildet unter der drehbaren Plattform 15 eine zweite Mehrfach-Gerätegarnitur 101, während das aus den Rohrstücken 46 und den daran vorgesehenen Spritzdüsen 48 zusammengesetzte andere Rohrkreuz am Dachgerüst 7 eine dritte Mehrfach-Gerätegarnitur 102 ergibt.

Jedes der Rohrstücke 45 bzw, 46 der beiden Mehrfach-Gerätegarnituren 101, 102 ist für eine andersartige Reinigungsflüssigkeit vorgesehen. Der obere Förderleistungsbereich der Hochdruckpumpe 41, der bis zu 4'000 l/h reicht, ist für die Speisung der zweiten und der dritten Mehrfach-Gerätegarnitur 101 und 102 ausgelegt. Die beiden Mehrfach-Gerätegarnituren 101, 102 sind ferner mit Hilfe je eines nicht dargestellten Antriebes in den beiden Umlaufrichtungen drehbar oder zumindest schwenkbar. Die Rohrstücke 46 am Dachgerüst 7 sind in Seitenansicht gemäss der Figur 1 nach unten gebogen ausgebildet.

In der Figur 1 ist ferner unterhalb des Bodengerüstes 16 ein Sammelschacht 50 für verschmutzte Reinigungsflüssigkeiten vorgesehen, aus dem ein Abflusskanal 51 zu einem ebenfalls unterirdisch angelegten, an sich bekannten Oelabscheider 52 führt. Die Entleerung von Schlamm S aus dem Sammelschacht 50 erfolgt jeweils durch eine auf geeignete Weise in der drehbaren Plattform 15 ausgebildete, in Figur 1 nicht sichtbare Oeffnung, während der Oelabscheider 52 in an sich bekannter Art und Weise entleert wird.

Die Reinigung eines auf die drehbare Plattform 15 abgestellten Kraftfahrzeuges Kf kann mittels der drei Mehrfach-Gerätegarnituren 100, 101 und 102 bei gleichzeitiger Drehung der Plattform 15 simultan von oben, von der Seite sowie von unten unter Mitwirkung lediglich einer einzigen Bedienungsperson Bp in Angriff genommen und rasch durchgeführt werden. Da die Durchlaufzeit der zu behandelnden Fahrzeuge in der Anlage gemäss der Erfindung im Vergleich zu derjenigen in bekannten Anlagen erheblich kürzer ist, lässt sich eine bedeutende Umsatzsteigerung und damit eine verbesserte Wirtschaftlichkeit der Anlage realisieren. Die Bedienungsperson Bp wird vom mühseligen Herumschleppen eines langen, schweren Schlauches befreit.

Zur Erhöhung der mechanischen Reinigungswirkung der Flüssigkeitsstrahlen aus den drei Mehrfach-Gerätegarntiuren 100, 101, 102 zwecks Entfernung hartnäckig haftenden Schmutzes vom Fahrzeugkasten ist eine kraftgetriebene Bürstenwalze 55 mit im wesentlichen senkrechter Drehachse manuell mit mehreren Freiheitsgraden an entsprechenden Führungen 56 des Dachgerüstes 7 bewegbar angeordnet. Ein zur Handhabung der Bürstenwalze 55 an dieser befestigter Führungsgriff 57 weist in der Figur 1 nicht sichtbare Handtasten zur Steuerung des nicht gezeigten Bürstenwalzenantriebes auf. Es kann auch eine weitere kraftgetriebene Bürstenwalze mit im wesentlicher waagerechter Drehachse vorgesehen sein.

Dank dieser Massnahme wird eine Kombination der Vorteile einer automatischen Waschstrasse (siehe z.B. US-A-4,135,533 oder US-A-3,263,341) mit derjenigen einer manuell betätigbaren Selbstwaschanlage erreichbar. Für den Behandlungsprozess müssen vorstehende Bestandteile sowie allfällige Ausrüstungsgegenstände des Kraftfahrzeuges Kf nicht mehr entfernt werden.

Sämtliche flüssigkeitsführenden Apparate wie die Förderpumpen 41 bis 43, Schläuche 36, Spritzlanzen 37 und Rohrstücke 45, 46 mit Spritzdüsen 38, 47, 48 sind mit einem selbstreglenden Begleitheizsystem aus halbleitenden Kunststoffheizbändern versehen, die übersichtlichkeitshalber in der Zeichnung nicht dargestellt sind. Die Elemente wie Pumpe, Schlauch und Spritzlanze mit Spritzdüse oder Rohrstück nebst Spritzdüse jeweils einer zur Förderung immer derselben Reinigungsflüssigkeit bestimmten Garnitur sind mit derselben Farbe markiert, mit der auch die zu fördernde Reinigungsflüssigkeit gefärbt ist. Die geschilderte Art und Weise für die Rostsicherung bzw. Unterscheidung wird nur durch die erfindungsgemässe Mehrfachanordnung getrennter Schläuche 36 bzw. Rohrstücke 45, 46 ermöglicht.

Des weiteren sind zwei Trocknungsgebläse 58 mit einstellbarer Anströmrichtung am Dachgerüst 7 über der drehbaren Plattform 15 derart vorgesehen, dass sie symmetrisch in Bezug auf ein auf dieser stehendes Kraftfahrzeug Kf hängen. In der Figur 1 ist lediglich eines der beiden Trocknungsgebläse 58 sichtbar.

Zur Anlage gemäss einer Weiterbildung der Erfindung gehört selbstverständlich auch eine in der Zeichnung nicht gezeigte Warmwasseraufbereitungsanlage mit Elektro- oder Gasheizung, deren Flüssigkeitsbehälter mit eintauchbaren Heizplatten ausgerüstet sind. Es könnte alternativ zur Warmwasseraufbereitung auf dem Pilzdach 6 des Behandlungsraumes 2 eine drehverstellbare Sonnenzellenanlage vorgesehen und mit Hilfe eines Infrarotsensors der Bewegung der Sonne nachführbar sein.

Die Steuerung der Dreh-, Heb- und Senkbewegung der drehbaren Plattform 15 erfolgt mittels eines am Dachgerüst 7 bewegbar aufgehängten Handsteuergerätes 59. Zur Einstellung von Förderdruck p und Fördermenge Q in den 3 Schläuchen 36 der ersten Mehrfach-Gerätegarnitur 100 sind aus der Zeichnung nicht ersichtliche Stellorgane jeweils an Griff einer jeden Spritzlanze 37 vorgesehen. Sämtliche Stellgrössen für die beiden anderen Mehrfach-Gerätegarnituren 101, 102, die Warmwasseraufbereitungsanlage und die beiden Trocknungsgebläse 58 sind von einem zentralen Kommandopult 60 aus steuerbar, das im Bereich der ersten Mehrfach-Gerätegarnitur 100 auf dem Bedienungsstand 34 untergebracht ist. Schliesslich befindet sich im Behandlungsraum 2, vorzugsweise an dessen Dachgerüst 7, eine nicht gezeigte Lautsprecheranlage, die zur Durchgabe von Bedienungsinformationen sowie gegebenenfalls Werbung und Unterhaltungsmusik von einer zentralen Betriebsleitstelle aus betreibbar ist. Eine solche Betriebsleitstelle wird vorzugsweise in Mehrfachanlagen gemäss den Figuren 6a, b und c vorgesehen. Dieses Audio-Leitsystem wird ebenfalls nur wegen der kurzen Entfernungen realisierbar, die sich ihrerseits durch die Erfindung ergeben.

Erstellung und Betrieb einer Anlage gemäss der Erfindung erscheint im Lichte der vorstehenden Ausführungen rasch und technisch problemlos durchführbar und wirtschaftlich günstiger als bekannte Selbstwaschanlagen. Die Anlage gemäss der Erfindung eignet sich überdies vorzüglich auch für Kontroll-, Wartungs- und Montagearbeiten im Autogewerbe.

## Patentansprüche

1. Anlage zur Naßreinigung von Kraftfahrzeugen (Kf), mit einem mindestens teilweise gegenüber der Umgebung abgegrenzten, überdachten Behandlungsraum (2), einer angetrieben drehbaren Plattform (15) im Boden des Behandlungsraumes (2) zur Aufnahme eines zu reinigenden Kraftfahrzeugs (Kf), und einer Einrichtung zum Aufbringen von Reinigungsflüssigkeit auf das zu reinigende Kraftfahrzeug (Kf),
   **dadurch gekennzeichnet,**
   daß neben der Plattform (15) im feststehenden Bodenbereich des Behandlungsraums (2) ein Standplatz (34) für eine Selbstwaschperson (Bp) und eine Schlauchtrommelanordnung (100) vorgesehen sind, die mindestens drei rotierbare Trommeln (35) jeweils mit einem davon abwickelbaren und darauf aufwickelbaren Schlauch (36) sowie einer Spritzdüsenlanze (37) am freien Schlauchende aufweist, wobei jeder Schlauch (36) mit einer Zuführeinrichtung für eine eigene Behandlungsflüssigkeit verbunden ist.

2. Anlage nach Anspruch 1,
   **dadurch gekennzeichnet,**
   daß die Lagerung der Plattform (15) exzentrisch in bezug auf die geometrische Mitte des Bodens des Behandlungsraumes (2) vorgesehen ist.

3. Anlage nach Anspurch 1 oder 2,
   **dadurch gekennzeichnet,**
   daß die Plattform (15) ein aus Sektoren ausgebildetes, kreisrundes Stahlgerippe (19) aufweist, in das Rostelemente (20) ebenfalls aus Stahl und mit Kreisausschnittsform eingesetzt sind.

4. Anlage nach einem der Ansprüche 1 bis 3,
   **dadurch gekennzeichnet,**
   daß die Plattform (15) auf Rollen (21) gelagert ist, die zwischen einem äußeren Schutzkragen (22) und einem inneren Schutzkragen (23) in Umfangsnähe gegen die Unterseite der Plattform (15) anliegen, wobei die Lagerung der Rollen (21) je über eine Höhenreguliervorrichtung (24) im Bodengerüst (16) der Plattform (15) verankert ist.

5. Anlage nach einem der Ansprüche 1 bis 4,
   **dadurch gekennzeichnet,**
   daß die Plattform (15) auf Rollen (21) gelagert ist und daß zum Drehen der Plattform (15) ein auf eine der Rollen (21) einwirkender Antrieb (25) vorgesehen ist.

6. Anlage nach einem der Ansprüche 1 bis 4,
   **dadurch gekennzeichnet,**
   daß zum Drehen der Plattform (15) ein zentraler Unterflurantrieb vorgesehen ist.

7. Anlage nach einem der Ansprüche 1 bis 6,
   **dadurch gekennzeichnet,**
   daß die Kraftmaschine des Drehantriebs (25) der Plattform (15) ein Elektromotor (26) oder ein Hydraulikmotor ist.

8. Anlage nach einem der Ansprüche 1 bis 7,
   **dadurch gekennzeichnet,**
   daß Drehrichtung und Geschwindigkeit des Drehantriebs (25) der Plattform (15) einstellbar sind.

9. Anlage nach einem der Ansprüche 1 bis 8,
   **dadurch gekennzeichnet,**
   daß der Plattform (15) ein Vertikalantrieb (28) zugeordnet ist, mit dessen Hilfe sie heb- und senkbar ist.

10. Anlage nach einem der Ansprüche 1 bis 9,
    **dadurch gekennzeichnet,**
    daß die die Plattform (15) umgebenden Bodenpartien des Behandlungsraums (2) einen ortsfesten Bodenrost (31), bestehend aus einem in Sektoren unterteilten Stahlgerippe (32) und in die Sektoren eingesetzten Rostelementen (33), bilden.

11. Anlage nach einem der Ansprüche 1 bis 10,
    **dadurch gekennzeichnet,**
    daß die drehbare Plattform (15) und ein diese umgebender, ortsfester Bodenrost (31) je mit einer Heizeinrichtung versehen sind.

12. Anlage nach einem der Ansprüche 1 bis 11,
**dadurch gekennzeichnet,**
daß der Standplatz (34) auf einem ortsfesten Bodenrost (31) des Behandlungsraums (2), und zwar in dessen Abschnitt mit dem größten Abstand zwischen der Plattform (15) und einer Wand des Behandlungsraums (2), vorgesehen ist.

13. Anlage nach einem der Ansprüche 1 bis 12,
**dadurch gekennzeichnet,**
daß kurze Schläuche (36) mit einer Wandstärke vorgesehen sind, die jeweils einem zur Zuführung immer derselben Behandlungsflüssigkeit bestimmten Förderdruck p angepaßt ist, und daß die Schläuche (36) bzw. Trommeln (35) manuell betätigbar sind.

14. Anlage nach einem der Ansprüche 1 bis 13,
**dadurch gekennzeichnet,**
daß die Schlauchtrommelanordnung (100) an dem Standplatz (34) in einer wärmeisolierten und beheizbaren Schutzverkleidung (39) angebracht ist, die an ihrer Außenfläche je eine ebenfalls wärmeisolierte und beheizbare Hülse zur Aufnahme jeweils einer Spritzdüsenlanze (37) aufweist, wenn diese außer Betrieb abgelegt ist.

15. Anlage nach einem der Ansprüche 1 bis 14,
**dadurch gekennzeichnet,**
daß unter der Plattform (15) vier Rohrstücke (45) in Kreuzform angeordnet sind, die jeweils eine Anzahl von gegen den Unterboden des zu reinigenden Kraftfahrzeugs (Kf) gerichteten Spritzdüsen (47) aufweisen.

16. Anlage nach einem der Ansprüche 1 bis 15,
**dadurch gekennzeichnet,**
daß über der Plattform (15) an einem Dachgerüst (7) des Behandlungsraums (2) vier Rohrstücke (46) in Kreuzform angeordnet sind, die jeweils eine Anzahl von gegen das Dach des zu reinigenden Kraftfahrzeugs (Kf) gerichteten Spritzdüsen (48) aufweisen.

17. Anlage nach Anspruch 15 oder 16,
**dadurch gekennzeichnet,**
daß das Rohrstückkreuz (45; 46) in den beiden Umlaufrichtungen drehbar oder zumindest schwenkbar angeordnet ist.

18. Anlage nach einem der Ansprüche 1 bis 17,
**dadurch gekennzeichnet,**
daß eine kraftgetriebene Bürstenwalze (55) mit im wesentlichen senkrechter Drehachse und eine kraftgetriebene Bürstenwalze mit im wesentlichen waagerechter Drehachse manuell mit mehreren Freiheitsgraden an entsprechenden Führungen (56) eines Dachgerüstes (7) des Behandlungsraums (2) bewegbar angeordnet sind.

19. Anlage nach einem der Ansprüche 1 bis 18,
**dadurch gekennzeichnet,**
daß eine die Förderdrücke p für die Zuführung der Behandlungsflüssigkeiten liefernde Versorgungseinheit eine Hochdruckpumpe (41) mit einem Druck von mindestens 100 bar und einer variablen Förderleistung von 1.000 bis 4.000 l/h sowie zwei gleiche Niederdruckpumpen (42, 43) je mit einem Druck von 20 bar und einer Förderleistung von 200 l/h umfaßt.

20. Anlage nach einem der Ansprüche 1 bis 19,
**dadurch gekennzeichnet,**
daß eine Versorgungseinheit zur Lieferung der Behandlungsflüssigkeiten eine Warmwasserbereitungsanlage mit Elektro- oder Gasheizung enthält.

21. Anlage nach einem der Ansprüche 1 bis 20,
**dadurch gekennzeichnet,**
daß zur Warmwasserbereitung auf dem Dach des Behandlungsraums (2) eine drehverstellbare Solaranlage vorgesehen und mittels eines Infrarotsensors der Bewegung der Sonne nachführbar ist.

22. Anlage nach einem der Ansprüche 1 bis 21,
**dadurch gekennzeichnet,**
daß alle flüssigkeitsführenden Einrichtungen, wie Pumpen (41, 42, 43), Schläuche (36), Spritzdüsenlanzen (37) und Rohrstücke (45, 46) mit Spritzdüsen (47, 48), mit einem selbstregelnden Begleitheizsystem aus halbleitenden Kunststoffheizbändern und die Flüssigkeitsbehälter einer Versorgungseinheit zur Lieferung der Behandlungsflüssigkeiten mit eintauchbaren Heizplatten ausgerüstet sind.

23. Anlage nach einem der Ansprüche 1 bis 22,
**dadurch gekennzeichnet,**
daß an einem Dachgerüst (7) des Behandlungsraums (2) über der Plattform (15) zwei Trocknungsgebläse (58) mit einstellbarer Anströmrichtung vorgesehen sind.

24. Anlage nach einem der Ansprüche 1 bis 23,
**dadurch gekennzeichnet,**
daß ein den Behandlungsraum (2) umschließendes Gehäuse (1) aus vorfabrizierten Elementen nach Art eines Pfahlbaus mit einem kreisrunden oder vieleckigen Grundriß erstellt ist, dessen Traggerüst aus eckigen, metallenen Profilrohren (3) an einer Anzahl von in den Erdboden getriebenen Stahlpfählen (4) verankert, mit dünnen Wandplatten (5) aus halbdurchsichtigem Kunststoff verkleidet und mittels eines Pilzdaches (6) aus dem gleichen Material abgedeckt ist.

25. Anlage nach einem der Ansprüche 1 bis 24, **dadurch gekennzeichnet,** daß Ein- und Ausgangstüren (11, 12, 13) des Behandlungsraums (2) durch bogenförmige oder ebene, an Führungsvorrichtungen (14) verschiebbar angeordnete Wandplatten (5) gebildet sind, wobei Standort und Ausrichtung von Ein- und Ausgang beliebig wählbar und damit insbesondere im Fall einer Gruppe mehrerer unmittelbar nebeneinander aufgestellter Behandlungsraum-Gehäuse (1), vorzugsweise mit kreisrundem Grundriß, den jeweiligen örtlichen Gegebenheiten bzw. Erfordernissen anpaßbar sind.

26. Anlage nach einem der Ansprüche 1 bis 25, **dadurch gekennzeichnet,** daß im Behandlungsraum (2) unterhalb eines Bodengerüstes (16) der Plattform (15) und eines die Plattform (15) umgebenden, ortsfesten Bodenrostes (31) eine Bodenisolation (18) in Form einer Kunststoffolie oder eines Bleches verlegt ist.

27. Anlage nach einem der Ansprüche 1 bis 26, **dadurch gekennzeichnet,** daß zur Steuerung der Drehbewegung und ggf. der Heb- und Senkbewegung der Plattform (15) ein an einem Dachgerüst (7) des Behandlungsraums (2) bewegbar aufgehängtes Handsteuergerät (59), zur Ansteuerung der kraftbetriebenen Bürstenwalzen (55), sofern vorhanden, jeweils an deren Führungsgriff (57) angeordnete Drucktasten, und zur Einstellung von Förderdruck p und Fördermenge Q in den drei Schläuchen (36) der Schlauchtrommelanordnung (100) jeweils am Griff der betreffenden Spritzdüsenlanze (37) angebrachte Stellorgane vorgesehen sind, während sämtliche Stellgrößen für, sofern vorhanden, die beiden Rohrstückkreuze (45, 46), die Warmwasserbereitungsanlage und die beiden Trocknungsgebläse (58) von einem zentralen Kommandopult (60) an dem Standplatz (34) aus steuerbar sind.

28. Anlage nach einem der Ansprüche 1 bis 27, **dadurch gekennzeichnet,** daß die verschiedenen Behandlungsflüssigkeiten zusammen jeweils mit der zu deren Zuführung zu dem zu behandelnden Kraftfahrzeug (Kf) vorgesehenen Spritzgarnitur, wie Schlauch (36), Spritzdüsenlanze (37) oder Rohrstückkreuz (45, 46) mit Spritzdüsen (47, 48), je mit einer anderen Farbe markiert sind.

29. Anlage nach einem der Ansprüche 1 bis 28, **dadurch gekennzeichnet,** daß in dem Behandlungsraum (2), vorzugsweise an dessen Dachgerüst (7), eine von einer zentralen Betriebsleitstelle aus betreibbare Lautsprecheranlage zur Durchgabe von Bedienungsinformationen, Werbung und Unterhaltungsmusik angeordnet ist.

## Claims

1. Installation for wet cleaning motor vehicles (Kf), comprising a covered treatment area (2) at least partially screened off from the surrounding area, a powered rotary platform (15) in the floor of the treatment area (2) for receiving a motor vehicle (Kf) that is to be cleaned, and a device for applying cleaning fluid to the motor vehicle (Kf) to be cleaned, characterised in that alongside the platform (15) in the fixed floor region of the treatment area (2) are provided a standing area (34) for a self-service carwash customer (Bp) and a hose reel station (100) incorporating at least three rotatable drums (35), each with a hose (36) which can be unwound therefrom and rewound thereonto, as well as with a spray nozzle attachment (37) on the free end of the hose, each hose (36) being connected to a feed device for its own cleaning fluid.

2. Installation according to claim 1, characterised in that the platform (15) is designed to be mounted off-centre in relation to the geometric centre of the floor of the treatment area (2).

3. Installation according to claim 1 or 2, characterised in that the platform (15) has a circular steel carcase (19), made up of sectors, into which are inserted the grating elements (20), which are likewise made of steel and in the shape of sectors of a circle.

4. Installation according to one of claims 1 to 3, characterised in that the platform (15) is mounted on rollers (21) which rest between an outer protective collar (22) and an inner protective collar (23) against the underside of the platform (15) near the circumference, the mounting of each roller (21) being anchored in the floor staging (16) of the platform (15) by means of a height regulating device (24).

5. Installation according to one of claims 1 to 4, characterised in that the platform (15) is mounted on rollers (21) and that a drive unit (25) acting on one of the rollers (21) is provided to turn the platform (15).

6. Installation according to one of claims 1 to 4, characterised in that a central underfloor drive unit is provided to turn the platform (15).

7. Installation according to one of claims 1 to 6, characterised in that the motor powering the drive unit (25) for the platform (15) is an electric motor (26) or a hydraulic motor.

8. Installation according to one of claims 1 to 7, characterised in that the direction of rotation and speed of the drive unit (25) for turning the platform (15) are adjustable.

9. Installation according to one of claims 1 to 8, characterised in that the platform (15) incorporates a vertical drive unit (28), by means of which it can be raised and lowered.

10. Installation according to one of claims 1 to 9, characterised in that the floor sections of the treatment area (2) that surround the platform (15) form a fixed floor grating (31) comprising a steel carcase (32) divided into sectors and grating elements (33) inserted into the sectors.

11. Installation according to one of claims 1 to 10, characterised in that the rotatable platform (15) and a fixed floor grating (31) surrounding the latter are each provided with a heating device.

12. Installation according to one of claims 1 to 11, characterised in that the standing area (34) is provided on a fixed floor grating (31) of the treatment area (2), in the portion thereof exhibiting the greatest distance between the platform (15) and a wall of the treatment area (2).

13. Installation according to one of claims 1 to 12, characterised in that short hoses (36) are provided whose respective thickness is adapted to a given delivery pressure p for supplying always the same treatment fluid, and that the hoses (36), or drums (35), can be operated manually.

14. Installation according to one of claims 1 to 13, characterised in that the hose reel station (100) is mounted on the standing area (34) in a heat-insulated and heatable protective covering (39), the outer surface of which in each case also has a heat-insulated and heatable sleeve for receiving a respective spray nozzle attachment (37) when the latter is put away out of use.

15. Installation according to one of claims 1 to 14, characterised in that four pipe sections (45) are disposed in the shape of a cross beneath the platform (15), each having a number of spray nozzles (47) directed at the underchassis of the motor vehicle (Kf) being cleaned.

16. Installation according to one of claims 1 to 15, characterised in that four pipe sections (46) are disposed in the shape of a cross above the platform (15) on a roof frame (7) of the treatment area (2), each having a number of spray nozzles (48) directed at the roof of the motor vehicle (Kf) being cleaned.

17. Installation according to claim 15 or 16, characterised in that the pipe section cross (45; 46) is arranged so as to turn or at least swivel in both directions of rotation.

18. Installation according to one of claims 1 to 17, characterised in that a motorized rotary brush (55) with a substantially vertical rotational axis and a motorised rotary brush with a substantially horizontal rotational axis are arranged on corresponding guides (56) of a roof frame (7) of the treatment area (2) so as to be manually displaceable with a plurality of degrees of freedom.

19. Installation according to one of claims 1 to 18, characterised in that a unit providing the delivery pressures p for supplying the treatment fluids comprises a high-pressure pump (41) with a pressure of at least 100 bar and a variable delivery rate of 1000 to 4000 l/h, and two identical low-pressure pumps (42, 43) with a pressure of 20 bar and a delivery rate of 200 l/h each.

20. Installation according to one of claims 1 to 19, characterised in that a supply unit for delivering the treatment fluids contains a hot water supply unit with electric or gas heating.

21. Installation according to one of claims 1 to 20, characterised in that hot water is provided by a rotationally adjustable solar unit on the roof of the treatment area (2), said unit being able to track the sun's movement by means of an infra-red sensor.

22. Installation according to one of claims 1 to 21, characterised in that all fluid carrying equipment, viz. pumps (41, 42, 43), hoses (36), spray nozzle attachments (37) and pipe sections (45, 46) with spray nozzles (47, 48), are equipped with a self-regulating auxiliary heating system consisting of semi-conducting plastic heating strips and the fluid containers of a supply unit for delivering the treatment fluids are equipped with immersible heating plates.

23. Installation according to one of claims 1 to 22, characterised in that two blower driers (58) with adjustable airflow direction are provided on a roof frame (7) of the treatment area (2) above the platform (15).

24. Installation according to one of claims 1 to 23, characterised in that an enclosure (1) surrounding the treatment area (2) and made from prefabricated elements in the manner of a pile construction with a circular or multi-angled layout is erected, the supporting carcase of which, comprising angular metal tube sections (3), is anchored on a number of steel piles (4) driven into the ground, is covered with thin wall panels (5) of semi-transparent plastic and topped by a mushroom roof (6) of the same material.

25. Installation according to one of claims 1 to 24, characterised in that entrance and exit doors (11, 12, 13) of the treatment area (2) are constituted by arc-shaped or plane wall panels (5) movably arranged on guide mechanisms (14), the siting and orientation of the entrance and exit being selectable at will and thus, in particular in the case of a plurality of treatment area enclosures (1) grouped immediately alongside one another, preferably circular in layout, able to be adapted to the particular features or needs of the locality.

26. Installation according to one of claims 1 to 25, characterised in that floor insulation (18) in the form of plastic or metal sheeting is laid in the treatment area (2) beneath the floor staging (16) of the platform (15) and a fixed floor grating (31) surrounding the platform (15).

27. Installation according to one of claims 1 to 26, characterised in that to control the rotational movement and, if appropriate, the raising and lowering movement of the platform (15), there is provided a manual control device (59) movably suspended on a roof frame (7) of the treatment area (2), to activate the motorised rotary brushes (55) (where provided) pushbuttons disposed on each guide handle (57) thereof, and to set the delivery pressure p and quantity q in the three hoses (36) of the hose reel station (100) there are provided actuators on the handle of each spray nozzle attachment (37) thereof, while all the control variables for (where provided) the two pipe section crosses (45, 46), the hot water supply unit and the two blower driers (58) can be controlled from a central command console (60) on the standing area (34).

28. Installation according to one of claims 1 to 27, characterised in that the various treatment fluids, along with the respective spray fittings provided to feed them to the motor vehicle (Kf) being treated, viz. hose (36), spray nozzle attachment (37) or pipe section cross (45, 46) with spray nozzles (47, 48), are each marked with a different colour.

29. Installation according to one of claims 1 to 28, characterised in that a loudspeaker unit which can be operated from a central control point is arranged in the treatment area (2), preferably on the roof frame (7) thereof, for relaying operating information, advertising and background music.

**Revendications**

1. Station de lavage de véhicules automobiles (Kf), comportant un espace de traitement (2) couvert par une toiture, délimité au moins partiellement par rapport à l'environnement, une plateforme tournante (15) motorisée, au sol de l'espace de traitement (2), pour supporter un véhicule automobile (Kf) à nettoyer, et un dispositif pour amener du liquide de nettoyage sur le véhicule automobile (Kf) à nettoyer, caractérisée en ce qu'
outre la plateforme (15), sont encore prévus dans la zone du sol fixe de l'enceinte de traitement (2) une aire évolutoire (34), pour une personne lavant soi-même (Bp) et un dispositif à tambours à tuyau (100), qui présente au moins trois tambours rotatifs (35), chacun avec un tuyau (36) susceptible d'en être déroulé et enroulé, ainsi qu'une lance à buse d'aspersion (37) montée à l'extrémité du tuyau, chaque tuyau (36) étant relié à un dispositif d'amenée de liquide de traitement spécifique.

2. Station selon la revendication 1, caractérisée en ce que
le montage à rotation de la plateforme (15) est prévu excentré par rapport au centre géométrique de l'espace de traitement (2).

3. Station selon la revendication 1 ou 2, caractérisée en ce que la plate forme (15) présente un caillebotis strié en acier (19) circulaire, constitué de secteurs, dans lequel sont disposés des éléments de grille (20), également en acier et à forme de segments de cercle.

4. Station selon l'une des revendications 1 à 3, caractérisée en ce que la plateforme (15) est montée sur des galets (21) qui appuient entre une collerette de protection extérieure (22) et une collerette de protection intérieure (23), à proximité périphérique contre la face inférieure de la plateforme (15), le montage à rotation de chacun des galets (21) étant ancré, par l'intermédiaire d'un dispositif de réglage en hauteur (24), dans la charpente de sol (16) de la plateforme (15).

5. Station selon l'une des revendications 1 à 4, caractérisée en ce que la plateforme (15) est montée à rotation sur des galets (21) et qu'un entraînement (25) agissant sur l'un des galets (21) est prévu pour assurer la rotation de la plateforme (15).

6. Station selon l'une des revendications 1 à 4, caractérisée en ce qu' un entraînement sous plancher central est prévu pour assurer la rotation de la plateforme (15).

7. Station selon l'une des revendications 1 à 6, caractérisée en ce que le moteur de l'entraînement en rotation (25) de la plate forme (15) est un moteur électrique ou un moteur hydraulique.

8. Station selon l'une des revendications 1 à 7, caractérisée en ce que le sens de rotation et la vitesse de l'entraînement en rotation (25) de la plate forme (15) sont réglables.

9. Station selon l'une des revendications 1 à 8, caractérisée en ce qu' un entraînement vertical (28), à l'aide duquel la plateforme (15) est levable et abaissable est associé à cette dernière.

10. Station selon l'une des revendications 1 à 9, caractérisée en ce que les parties de sol, entourant la plateforme (15), de l'espace de traitement (2), forment une grille de plancher (31) localement fixe, composée d'un caillebotis en acier (32) subdivisé en secteurs et d'éléments de grille (33) insérés dans les secteurs.

11. Station selon l'une des revendications 1 à 10, caractérisée en ce que la plateforme tournante (15) et une grille de plancher (31), localement fixe et en faisant le pourtour, sont chacune pourvues d'un dispositif de chauffage.

12. Station selon l'une des revendications 1 à 11, caractérisée en ce que l'aire évolutoire (34) est prévue sur une grille de plancher (31) localement fixe de l'espace de traitement (2), à savoir dans sa partie qui présente la plus grande distance entre la plateforme (15) et une paroi de l'espace de traitement (2).

13. Station selon l'une des revendications 1 à 12, caractérisée en ce que sont prévus de courts tuyaux (36) avec une épaisseur de paroi chaque fois adaptée à une pression de refoulement p, déterminée pour amener toujours le même liquide de traitement, et en ce que les tuyaux (36), respectivement tambours (35), sont actionnables manuellement.

14. Station selon l'une des revendications 1 à 13, caractérisée en ce que le dispositif à tambours à tuyau (100) est disposé sur l'aire évolutoire (34), dans un coffrage de protection (39), isolé thermiquement et susceptible d'être chauffé, qui présente sur sa surface extérieure des manchons, également isolés thermiquement et susceptibles d'être chauffés, pour recevoir chacun une lance à buse d'aspersion (37), lorsque ces dernières sont mis hors service.

15. Station selon l'une des revendications 1 à 14, caractérisée en ce que, sous la plateforme (15) sont disposés quatre pièces tubulaires (45) en forme de croix, qui présentent chacune un certain nombre de buses d'aspersion (47) orientées vers le dessous du plancher du véhicule automobile (Kf) à nettoyer.

16. Station selon l'une des revendications 1 à 15, caractérisée en ce que, sur la plateforme (15) et sur une charpente (2) de l'espace de traitement (2), sont disposées quatre pièces tubulaires (46) en forme de croix, qui présentent chacune un certain nombre de buses d'aspersion (48) orientées vers le toit du véhicule automobile (Kf) à nettoyer.

17. Station selon la revendication 15 ou 16, caractérisée en ce que la croix formée à partir d'une pièce tubulaire (45;46) est tournante dans les deux sens de rotation ou au moins pivotante;

18. Station selon l'une des revendications 1 à 17, caractérisée en ce qu' un rouleau de brossage (55) à entraînement motorisé, avec un axe de rotation sensiblement vertical et un rouleau de brossage à entraînement motorisé à axe d'entraînement sensiblement horizontal, dotés de plusieurs degrés de liberté, sont disposés déplaçables manuellement, sur des guidages correspondants d'une charpente (7) de l'espace de traitement (2).

19. Station selon l'une des revendications 1 à 18, caractérisée en ce qu'une unité d'alimentation, fournissant la pression de refoulement p nécessaire à l'amenée des liquides de traitement, comprend une pompe haute pression (41), fournissant une pression d'au moins 100 bar et un débit variable de 1.000 à 4.000 l/h, ainsi que deux pompes basse pression (42,43), fournissant chacune une pression de 20 bar et un débit de 200 l/h.

20. Station selon l'une des revendications 1 à 19, caractérisée en ce qu' une unité d'amenée servant à fournir les liquides de traitement contient une installation de préparation d'eau chaude, à chauffage électrique ou au gaz.

21. Station selon l'une des revendications 1 à 20, caractérisée en ce qu' une installation solaire, orientable en rotation et dotée d'un capteur infra-rouges pour assurer le mouvement de poursuite du soleil, est prévue sur le toit de l'espace de traitement (2), pour assurer la préparation de l'eau chaude,

22. Station selon l'une des revendications 1 à 21, caractérisée en ce que tous les dispositifs véhiculant du liquide, tels que les pompes (41,42,43), tuyaux (36), lances à buse d'aspersion (37) et pièces tubulaires (45,46) avec les buses d'aspersion (47,48), sont équipés d'un système de chauffage d'accompagnement autorégulateur, composé à partir de rubans chauffants en matière synthétique semi conducteurs et les réservoirs à liquide d'une unité d'amenée, destinée à fournir les liquides de traitement, sont équipés de plaques chauffantes submersibles.

23. Station selon l'une des revendications 1 à 22, caractérisée en ce que deux soufflantes de séchage (48) à dispositif de soufflage réglable sont prévues sur une charpente (7) de l'espace de traitement (2), sur la plateforme (15).

24. Station selon l'une des revendications 1 à 23, caractérisée en ce qu' une enceinte (1), entourant l'espace de traitement (2) et composée d'éléments préfabriqués, à la manière d'une construction en palis, est constituée, avec un contour circulaire ou polygonal, dont la charpente support, composée de tubes profilés métalliques (3), est ancrée sur un certain nombre de pieux en acier (4) enfoncés dans le sol, habillée à l'aide de minces panneau muraux (5) en matière synthétique semi-transparente et recouvert d'un toit en champignon (6) composé du même matériau.

25. Station selon l'une des revendications 1 à 24, caractérisée en ce que des portes d'entrée et de sortie (11,12,13) de l'espace de traitement (2) sont formées par des panneaux muraux (5) arqués ou plans, déplaçable sur des dispositifs e guidage (14), l'emplacement et l'orientation de l'entrée et de la sortie pouvant être choisis à volonté, et ainsi en particulier dans le cas d'un groupe de plusieurs enceintes d'espace de traitement (1) installée immédiatement les unes à côté des autres, de préférence avec un profil circulaire, adaptable aux conditions, respectivement exigences, locales respectives.

26. Station selon l'une des revendications 1 à 25, caractérisée en ce qu' une isolation de plancher (18), ayant la forme d'une feuille en matière synthétique ou d'une tôle, est posée dans l'espace de traitement (2), au-dessous d'une charpente de sol (16) de la plateforme (15) et d'une grille de plancher (31) localement fixe, entourant la plateforme (15).

27. Station selon l'une des revendications 1 à 26, caractérisée en ce que, des organes de réglage sont prévus, pour assurer la commande du mouvement de rotation et, le cas échéant, du mouvement de levage et d'abaissement de la plateforme (15), est prévu un appareil de commande manuelle (59), suspendu mobile à une charpente (7) de l'espace de traitement (2), pour assurer la commande des rouleaux de brossage motorisés (55), s'il y en a, chaque fois par action de boutons-poussoirs disposés dans sa poignée de guidage (57), et pour assurer le réglage de la pression de refoulement p et du débit de refoulement Q dans les trois tuyaux (36) du dispositif à tambours à tuyau (100), montés chaque fois sur la poignée, ou pistolet, de la lance à buse d'aspersion (37) concernée, l'installation de préparation d'eau chaude et les deux soufflantes de séchage (58) étant commandables depuis un pupitre de commande central (60) situé dans l'aire évolutoire.

28. Station selon l'une des revendications 1 à 27, caractérisée en ce que
les différents liquides de traitement, conjointement avec la garniture d'aspersion respective prévue pour son amenée au véhicule automobile (Kf) à traiter, garniture telle que tuyau (36), lance à buse d'aspersion (37) ou croix à pièce tubulaire (145,46) équipés de buses d'aspersion (47,48) sont respectivement marqués d'une couleur chaque fois différente.

29. Station selon l'une des revendications 1 à 28, caractérisée en ce qu'
une installation à haut-parleurs, placée sous la commande d'un poste central et destinée à diffuser des informations sur la manière d'utiliser la station de lavage, de la publicité et de la musique d'ambiance est disposée dans l'espace de traitement (2), de préférence sur sa charpente (7).

Schnitt A-A

Fig. 1

Fig. 2

EP 0 243 955 B1

Fig. 3

Fig.4

EP 0 243 955 B1

Fig.5

Fig. 6

Fig.7